Europäisches Patentamt

European Patent Office

Office européen des brevets

(11) Numéro de publication: **0 197 813**
**B1**

## FASCICULE DE BREVET EUROPÉEN

(12)

(45) Date de publication du fascicule du brevet:
23.11.88

(21) Numéro de dépôt: **86400510.3**

(22) Date de dépôt: **11.03.86**

(51) Int. Cl.⁴: **B 60 C 23/04,** G 01 S 15/88

(54) Dispositif de contrôle du gonflage d'un pneumatique.

(30) Priorité: **22.03.85 FR 8504446**

(43) Date de publication de la demande:
**15.10.86 Bulletin 86/42**

(45) Mention de la délivrance du brevet:
**23.11.88 Bulletin 88/47**

(84) Etats contractants désignés:
**CH DE GB IT LI SE**

(56) Documents cité:
**FR-A-2 455 520**
**SU-A-173 016**
**US-E-26 826**

(73) Titulaire: **REGIE NATIONALE DES USINES RENAULT, Boîte postale 103 8-10 avenue Emile Zola, F-92109 Boulogne- Billancourt (FR)**

(72) Inventeur: **Lombard, Claude, 60, rue Corneille, F-78150 Le Chesnay (FR)**
Inventeur: **Colin, Pierre, 7, rue de la Roche, F-92500 Rueil Malmaison (FR)**

(74) Mandataire: **Saint Martin, René, Régie Nationale des Usines Renault Direction des Recherches et Développements Service 0804 8-10, Avenue Emile- Zola, F-92109 Boulogne Billancourt Cedex (FR)**

EP 0 197 813 B1

LIBER, STOCKHOLM 1988

## Description

La présente invention se rapporte à un dispositif de contrôle du gonflage des pneumatiques, notamment pour véhicule automobile.

Ce problème technique de la surveillance du gonflage d'un pneumatique est très important dans la mesure où le gonflage des pneus influe fortement sur la tenue de route du véhicule dans les virages d'une part et sur la durée de vie des pneus d'autre part en raison des risques d'éclatement des pneus sous-gonflés par accroissement de leur température de fonctionnement. En effet, un pneu sous-gonflé peut éclater en raison du travail de flexion qu'il subit au niveau des flancs, ce travail provoquant soit une élévation de la température du pneu qui cause une désolidarisation de la gomme de la bande de roulement d'avec les ceintures de métal du pneu, soit une déchirure du tissu constituant l'enveloppe interne du pneu.

Actuellement, le contrôle du gonflage des pneumatiques s'effectue notamment par mesure de la pression du fluide contenu dans le pneu, or cette mesure, pour être réellement intéressante, doit tenir compte à la fois de la température du pneu qui évolue au cours du fonctionnement - un pneu sous-gonflé s'échauffe et la valeur de la pression du fluide de gonflage croît - et de la charge du véhicule - à pleine charge, les pneus d'un véhicule doivent être sur-gonflés par rapport à une charge correspondant au seul conducteur.

Une autre solution existante pour le contrôle du gonflage des pneumatiques, décrite dans la demande de brevet français publiée sous le numéro 2 455 520, utilise un dispositif de mesure à distance monte contre le bandage pneumatique dont il peut détecter un profil anormal. L'inconvénient de cette solution vient de ce que le dispositif n'effectue qu'une détection d'un seuil de gonflage et non une mesure permanente de l'état de gonflage du pneu.

Le but de la présente invention est de contrôler le gonflage d'un pneu quelque soit la température de fonctionnement et le degré de la charge. Pour cela, cette invention est relative à un dispositif de contrôle dont le fonctionnement est basé sur la comparaison entre l'épaisseur du pneu dans sa partie écrasée en contact avec le sol et son épaisseur dans sa partie supérieure non déformée, cette comparaison renseignant sur l'écrasement du pneu.

Plus précisément, l'objet de l'invention est un dispositif de contrôle du gonflage d'un pneumatique équipant une roue d'un véhicule roulant sur le sol, essentielle ment caractérisé en ce qu'il comporte, placés au niveau de la surface de la jante de la roue en regard de la bande de roulement du pneu, des moyens de mesure permanente de l'écrasement du pneu à partir du calcul de la flèche du pneu constitués par un dispositif émetteur-récepteur émettant à travers le fluide de gonflage du pneu des ondes sonores vers la surface interne de la bande de roulement et recevant les ondes réfléchies par cette surface, et par des moyens électroniques de calcul de la distance entre la jante et la face interne du pneu, mesurée aux deux extrémités du diamètre de la roue orthogonal au sol.

Le dispositif, objet de l'invention, permet de mesurer l'écrasement du pneumatique sous l'effet du poids du véhicule et la température de fonctionnement, sans capteur supplémentaire. Et à partir de là, définir un seuil d'écrasement du pneu au-delà duquel, la sécurité du vehicule n'est plus assurée.

D'autres caractéristiques préférées et avantages de l'invention apparaîtront dans la description qui suit, de divers exemples de réalisation donnés à titre indicatif et non limitatif, illustrée par les figures suivantes qui représentent:

- les figures 1 et 2: deux vues du dispositif de contrôle selon l'invention, équipant une roue, selon deux plans de coupe respectivement perpendiculaire et parallèle à l'axe de rotation de la roue;
- la figure 3: une vue du dispositif selon l'invention, après une rotation d'un demi-tour de roue par rapport à la figure 1;
- les figures 4 et 5: des diagrammes de l'amplitude des ondes sonores émises et reçues par le dispositif selon la figure 1;
- les figures 6, 7, 8 et 10: des variantes de réalisation du dispositif selon l'invention;
- la figure 9: un diagramme de l'amplitude des ondes sonores émises et reçues par le dispositif selon la figure 8;

Les éléments qui, dans les différentes figures, remplissent les mêmes fonctions en vue des mêmes résultats portent des références identiques.

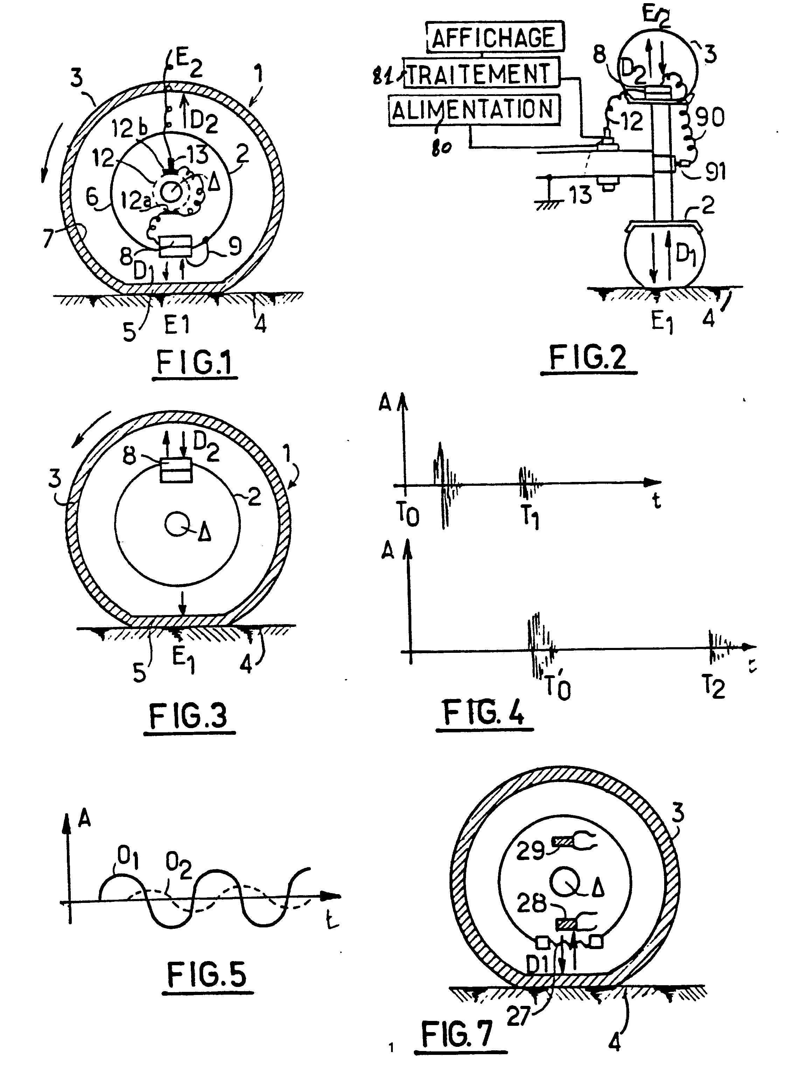

La figure 1 représente une vue du dispositif de contrôle selon l'invention, équipant une roue d'un véhicule roulant sur le sol, cette vue étant prise selon un plan de coupe perpendiculaire à l'axe Δ et la figure 2 en montre une vue selon un plan de coupe parallèle à l'axe Δ. La roue 1 comporte une jante 2 centrée sur l'axe de rotation Δ, à laquelle est fixé un pneu 3, qui repose sur le sol 4 en subissant une déformation 5 de sa bande de roulement, cet écrasement du pneu étant plus ou moins accentué selon la charge du véhicule.

Le dispositif de contrôle du gonflage d'un pneu, selon l'invention, est constitué d'une part par des moyens 8 d'émission-réception d'ondes sonores placés dans le pneu 3 et d'autre part par des moyens électroniques d'alimentation 80 associés à des moyens électroniques de traitement 81 des informations, destinés à renseigner sur l'écrasement du pneu et placés sur une partie fixe du véhicule.

Les moyens d'émission-réception 8 d'ondes sonores sont destinés à envoyer des ondes sonores à travers le fluide de gonflage du pneu 3, entre la face 6 de la jante 2 qui est en regard du pneu 3 et la face interne 7 de la bande de roulement du pneu 3, aux deux extrémités $E_1$ et $E_2$ du diamètre de la roue orthogonal au sol 4. Ces moyens fonctionnent avantageusement dans la bande des ultra-sons proches. La distance D entre la jante 2 et la bande de roulement a deux valeurs $D_1$ et $D_2$ selon qu'elle est mesurée aux points $E_1$ ou $E_2$, leur différence donnant une mesure de la flèche du pneu, renseignant sur l'écrasement du pneu. Ces moyens d'émission-réception 8 d'ondes sonores doivent être associés à des moyens d'alimentation 80 qui permettent leur excitation provoquant l'apparition d'ondes sonores et à des moyens de traitement 81 des informations qu'ils recueillent après réflexion de ces ondes contre la bande de roulement. Ces moyens de traitement 81 ont essentiellemnt pour but de calculer le pourcentage d'écrase m ent du pneu à partir des valeurs de la distance D ainsi mesurée et de le comparer à un seuil au-delà duquel il y aurait danger d'éclatement du pneu.

Dans un exemple particulier de réalisation, les moyens d'émission-réception 8 d'ondes sonores sont réalisés à partir d'une pastille piézo-électrique métallisée sur les deux faces, disposée dans une ouverture pratiquée dans la jante 2 de la roue 1 et connectée électrique ment aux moyens d'alimentation 80 qui l'excite et aux moyens de traitement 81 des informations. Sur la figure 1, une des électrodes de l'émetteur 8 est reliée au potentiel du véhicule par un fil 9 connecté à la jante 2 de la roue 1 et sur la figure 2, par un fil 90 à l'essieu 10 de la roue par contact tournant 91. La connexion électrique aux moyens d'alimentation 80 et aux moyens de traitement 81 se fait par un collecteur tournant 12 portant deux bandes conductrices 12a et 12b connectées électriquement ensemble. Un balai 13 assure la liaison entre le collecteur tournant 12 et l'émetteur-récepteur sonore 8.

Le fonctionnement du dispositif de contrôle est le suivant les moyens d'alimentation 80 excitent l'émetteur 8 à l'instant $T_0$ où celui-ci passe à la verticale du sol 4, en regard du point $E_1$. L'émetteur 8 envoie alors des ondes sonores qui se réfléchissent sur la face interne 7 du pneu 3 et sont recueillies par ce même émetteur-récepteur 8 à l'instant $T_1$ tel que le temps $T_1 - T_0$ soit le temps nécessaire aux ondes sonores pour parcourir le double de la distance $D_1$ mesurée entre la jante et le pneu au point $E_1$.

Lorsque l'émetteur-récepteur 8, après rotation d'un demi-tour de roue (figure 3), se trouve à la verticale du sol en regard du point $E_2$, les moyens d'alimentation 80 envoient des impulsions de courant dans le but de l'exciter et il émet à l'instant $T'_0$ des ondes sonores qui sont aussi réfléchies par la face interne du pneu et sont recueillies à l'instant $T_2$, tel que le temps $T_2 - T'_0$ soit supérieur à $T_1 - T_0$ puisque la mesure est effectuée en un endroit où le pneu n'est plus écrasé par le poids du véhicule. Comme il s'agit de comparer les valeurs de la distance D aux deux endroits particuliers du pneu où celui-ci est écrasé d'une part et a repris sa forme normale d'autre part, il peut être avantageux de mesurer le temps $T_2 - T'_0$ juste un peu après que l'émetteur-récepteur 8 soit passé à la verticale du sol.

La figure 4 montre les diagrammes d'amplitude des ondes sonores émises et recueillies par le dispositif 8, en fonction du temps. On constate que le temps $T_2 - T'_0$ est supérieur au temps $T_1 - T_0$ puisque le trajet parcouru par les ondes est supérieur dans la partie normale du pneu à celui correspondant à sa partie écrasée.

Le rapport entre les temps $(T_2 - T'_0)$ et $(T_1 - T_0)$ est représentatif de l'écrasement du pneu au sol et est indépendant à la fois de l'hygrométrie et de la température du fluide de gonflage du pneumatique en fonctionnement puisque toute variation de la vitesse de propagation du son dans le fluide est perçue de la même façon aux instants $T_1$ et $T_2$.

Par contre le temps $(T_2 - T'_0)$ est directement lié à la vitesse de propagation du son qui décroît avec la température et dans une plus faible mesure à la vitesse de rotation du pneu qui tend à accroître D2 sous l'effet de la force centrifuge s'exerçant sur le pneu. Ces deux effets vont donc dans le même sens lorsque la température et la vitesse de rotation croissent car ils sont perçus par le dispositif de contrôle comme un accroissement du diamètre de la bande de roulement, ce qui est intéressant pour la sécurité du véhicule.

Les moyens électroniques de traite ment 81 des informations recueillies sont destinés à calculer le rapport

$$\frac{T_1 - T_0}{T_2 - T'_0}$$

et la valeur absolue $T_2 - T'_0$ et à comparer cette dernière à une valeur de référence fonction du type de pneu et de ses conditions de fonctionnement, stockée dans une mémoire. Cette valeur de référence correspond au seuil d'écrasement qu'il ne faut pas dépasser sous peine d'insécurité pour le véhicule. On peut prévoir une liaison avec des moyens d'alerte, sonores ou lumineux, prévenant le conducteur du véhicule de l'état de gonflage de chaque pneu.

Les moyens d'émission-réception d'ondes sonores constituant une partie essentielle du dispositif de contrôle selon l'invention, peuvent être réalisés à partir d'une pastille de céramique pièzo-électrique, d'un barreau magnétostrictif, d'un émetteur sonore à aimant et bobine mobiles selon les dimensions du dispositif à concevoir et la présence ou l'absence d'une chambre à air dans le pneu. La présence d'une chambre à air oblige notamment à utiliser des ondes sonores basses fréquences de façon à permettra le passage de ces ondes à travers le caoutchouc de la chambre à air. Dans le cas d'ondes basse fréquence, il est intéressant de mesurer le déphasage entre l'onde émise $O_1$ et l'onde reçue $O_2$, dont les enveloppes sont représentées sur la figure 5.

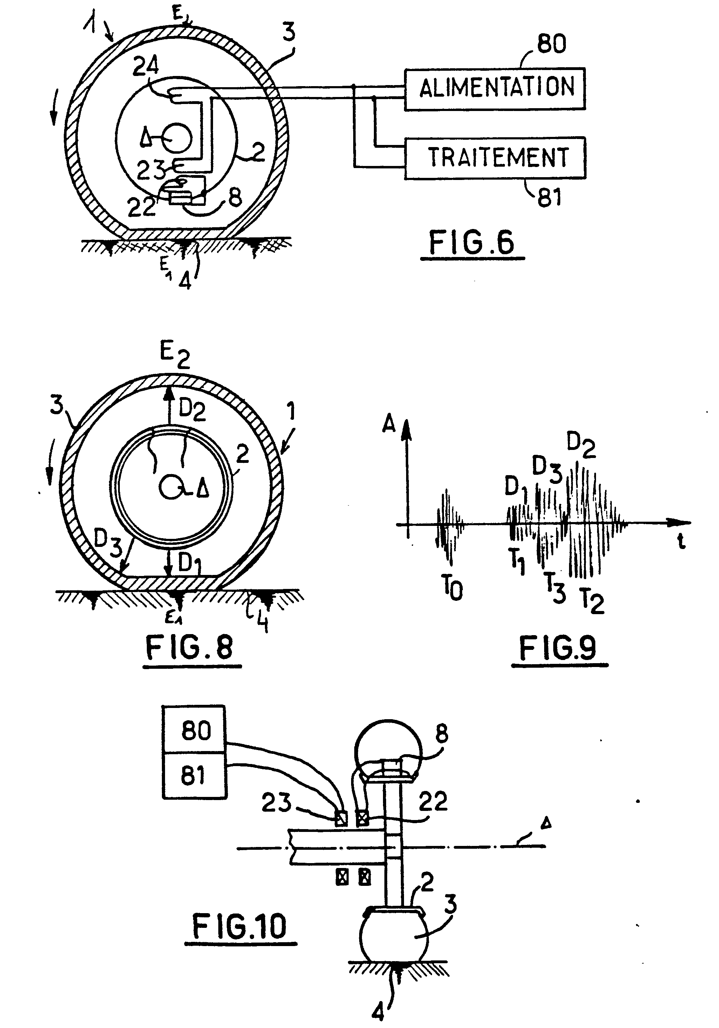

La figure 6 montre un autre exemple de réalisation du dispositif de contrôle du gonflage d'un pneu, selon l'invention, dans lequel la liaison réalisée sur la figure 1 par un collecteur tournant et un balai flottant est remplacée par une liaison sans contact au moyen de bobines coaxiales ou condensateur tournant. Etant donné que l'on peut assimiler une pastille de céramique pièzo-électrique à un condensateur dont les armatures se déforment en émettant une onde sonore, on peut réaliser un circuit oscillant à partir d'une bobine 22 et d'un condensateur pièzo-électrique 8 solidaire de la jante 2 de la roue 1, alimenté deux fois par tour de roue au moyen de deux bobines 23 et 24 fixées au châssis du véhicule et connectées électriquement aux moyens électroniques d'alimentation 80 et de traitement 81.

Dans le cas où on remplace la pastille pièzo-électrique par un barreau magnétostrictif, on peut, supprimer la bobine 22, le barreau étant alors directement excité par les deux bobines 23 et 24 avantageusement pourvues d'un noyau magnétique.

Sur la figure 7 est représenté un dispositif selon l'invention comportant non plus un dispositif émetteur-récepteur d'ondes sonores tournant avec la roue, mais deux tels dispositifs 28 et 29 fixés au châssis du véhicule, associés à une lumière 27 pratiquée dans la jante 2 de roue. Les deux émetteurs-récepteurs sonores 28 et 29 sont placés symétriquement par rapport à l'axe de rotation $\Delta$ de la roue et la lumière 27 est réalisée dans un matériau - du polyimide souple dit "Kapton" par exemple - fin et résistant à la pression de gonflage du pneu tout en autorisant le passage des ondes sonores émises et reçues après réflexion contre la paroi interne 7 du pneu 3. La distance D à mesurer a des valeurs supérieures à celles des cas précédemment décrits puisqu'il est nécessaire de prévoir une marge de sécurité entre les émetteurs-récepteurs sonores 28 et 29 et la jante 2.

La figure 8 représente une autre variante de réalisation du dispositif de contrôle selon l'invention, pour laquelle l'émetteur-récepteur sonore 8 est constitué par une bande mince de matériau pièzo-électrique par exemple, métalisée sur ses deux faces, collée sur la face interne de la jante 2 et connectée comme précédemment aux moyens d'alimentation 80 et de traitement 81. Cette bande émettrice peut être réalisée en fluorovinylidène dit PV2F. La connexion avec les moyens 80 et 81 peut se faire par un contact tournant 12 présentant une conduction constante, les deux lames 12a et 12b étant confondue en une seule couronne. Les moyens de traitement 81 des ondes sonores reçues doivent pouvoir, dans ce cas, détecter le temps le plus court $T_1 - T_0$ et le temps le plus long $T_2 - T'_0$ de retour de l'écho sonore. Cette bande 8 émet et reçoit des ondes sonores sur toute la périphérie de la bande de roule ment du pneu.

La figure 9 montre le diagramme d'amplitude des ondes sonores en fonction du temps: à l'instant $T_0$, une onde sonore est émise vers le point $E_1$ du pneu sous forme d'impulsion d'amplitude $A_0$; à l'instant $T_1$ apparaît une onde réfléchie d'amplitude $A_1$, après réflexion dans le pneu au point $E_1$, cette onde s'amplifiant au point $E_3$ de la bande de roulement où le pneu cesse d'être écrasé par le poids du véhicule pour être maximale au point $E_2$.

La figure 10 représente une autre variante de réalisation du dispositif de contrôle, dans laquelle le contact tournant entre l'émetteur-récepteur 8 d'ondes sonores et l'essieu du véhicule peut être remplacé par un système sans contact comprenant deux bobines coaxiales 30 et 31 disposées autour de l'axe de rotation $\Delta$ de la roue. L'une 30 est connectée à l'émetteur 8 et lui permet d'osciller autour de sa fréquence propre, l'autre 31 étant connectée aux moyens électroniques 80 et 81.

Les caractéristiques de mise en oeuvre de l'invention ne sont pas bien entendu limitées aux seuls modes de réalisation décrits et représentés; elle comprend également tous les équivalents techniques des moyens décrits ainsi que leurs combinaisons si elles sont effectuées dans l'esprit de l'invention et mises en oeuvre dans le cadre des revendications suivantes.

**Revendications**

1. Dispositif de contrôle du gonflage d'un pneumatique équipant une roue d'un véhicule roulant sur le sol, caractérisé en ce qu'il comporte, placés au niveau de la surface de la jante (2) de la roue (1) en regard de la bande de roulement du pneu (3), des moyens de mesure permanente de l'écrasement du pneu à partir du calcul de la flèche du pneu, constitués par un dispositif émetteur-récepteur (8) émettant à travers le fluide de gonflage du pneu (3) des ondes sonores vers la surface interne (7) de la bande de roulement et recevant les ondes réfléchies par cette surface, et par des moyens électroniques (81) de calcul de la distance (D) entre la tante (2) et la face interne (7) de la bande de roulement du pneu, mesurée aux deux extrémités ($E_1$ et $E_2$) du diamètre de la roue (1) orthogonal au sol (4).

2. Dispositif selon la revendication 1, caractérisé en ce que l'émetteur-récepteur (8) d'ondes sonores est connecté à des moyens électroniques (80) d'alimentation qui l'excitent à deux instants de chaque tour de rotation de la roue, correspondant au passage à la verticale du sol (4), au-dessous et au-dessus de l'axe de rotation (D) de la roue (1).

3. Dispositif selon la revendication 1, caractérisé en ce que le dispositif émetteur-récepteur (8) est constitué par deux emetteurs-récepteurs (28 et 29) placés symétriquement par rapport à l'axe de rotation (D) de la roue (1) à la verticale du sol (4), sur le châssis du véhicule, ces deux émetteurs étant associés à une fenêtre (27) pratiquée dans la jante (2).

4. Dispositif selon la revendication 1, caractérisé en ce que l'émetteur-récepteur (8) est constitué par une pastille pièzo-électrique métallisée sur ses deux faces ou par un barreau magnétostrictif, excité par les moyens d'alimentation (80).

5. Dispositif selon la revendication 1, caractérisé en ce que l'émetteur-récepteur (8) est constitué par une bande de matériau pièzo-électrique métallisée sur ses deux faces et excitée par des moyens d'alimentation (80).

6. Dispositif selon l'une des revendications 2 à 5, caractérisé en ce que le dispositif émetteur-récepteur sonore (8) est connecté aux moyens électroniques d'alimentation (80) et de traitement (81) des ondes sonores reçues par l'intermédiaire d'un collecteur tournant (12) grâce à un balai (13) frottant sur deux plaques (12a et 12b) disposées symétriquement autour de l'axe (D), à la verticale du sol (4).

7. Dispositif selon l'une des revendications 2 à 5, en ce que le dispositif émetteur-récepteur (8) est relié électriquement sans contact aux moyens électroniques (80 et 81) par l'intermédiaire de deux bobines (23 et 24) fixes placées de part et d'autre de l'axe D, symétriquement et à la verticale du sol (4).

8. Dispositif selon l'une des revendications 2 à 5, caractérisé en ce que le dispositif émetteur-récepteur (8) est connecté aux bornes d'une bobine (30) centrée sur l'axe (D) et couplée au moins périodiquement à une bobine (31) coaxiale reliée aux moyens électroniques d'alimentation (80) et de traitement (81).

9. Dispositif selon l'une des revendications 7 et 8 caractérisé en ce qu'une bobine tournante (22, 30) constitue l'un des éléments d'un circuit résonnant électro-acoustique dont le dispositif émetteur (8) constitue l'autre élément.

10. Dispositif selon la revendication 1, caractérisé en ce que les moyens électroniques (81) de calcul de la distance (D) sont destinés à calculer le temps de parcours $(T_1 - T_0)$ de l'onde sonore émise et reçue par l'émetteur-récepteur (8) après réflexion sur la bande de roulement du pneu, au point $(E_1)$ de contact du pneu (3) avec le sol (4) et le temps de parcours $(T_2 - T'_0)$ de l'onde sonore après réflexion au point $(E_2)$ au sommet du pneu et d'en déduire la valeur de la flèche du pneu.

**Patentansprüche**

1. Reifendruck-Kontrollvorrichtung, mit der ein Rad eines sich bewegenden Fahrzeugs versehen ist, dadurch gekennzeichnet, daß es auf Höhe des Randes der Felge (2) des Rades (1) und gegenüber der Lauffläche (3) des Reifens eine Anordnung für die kontinuierliche Messung des Eindrückens des Reifens aufweist, ausgehend von einer Berechnung der Reifenwölbung, bestehend aus einer Sende-Empfänger-Anordnung (8), die Schallwellen durch das Druckfluid des Reifens (3) aussendet, in Richtung zur Innenwand (7) der Lauffläche und die die von dieser Fläche reflektierenden Wellen empfängt und aus einer elektronischen Anordnung (81) zur Berechnung des Abstandes (D) zwischen Felge (2) und Innenwand (7) der Lauffläche des Reifens gemessen an den beiden Enden $(E_1$ und $E_2)$ des sich senkrecht zum Boden (4) erstreckenden Durchmessers des Rades (1).

2. Vorrichtung nach Anspruch 1, dadurch gekennzeichnet, daß der Schallwellen-Sende-Empfänger (8) mit einer elektronischen Versorgungsanordnung (80) verbunden ist, die ihn zu zwei Zeitpunkten bei jeder Radumdrehung einschaltet, entsprechend dem Durchgang durch die Senkrechte zum Boden (4) unterhalb und oberhalb der Drehachse (Δ) des Rades (1).

3. Vorrichtung nach Anspruch 1, dadurch gekennzeichnet, daß die Sender-Empfänger-Anordnung (8) aus zwei Sendern-Empfängern (28, 29) besteht, die symmetrisch zur Drehachse (Δ) des Rades (1) und senkrecht zum Boden (4) am Fahrzeugrahmen angeordnet sind, wobei diese beiden Sender mit einer in Felge (2) vorgesehenen Öffnung (27) zusammenwirken.

4. Vorrichtung nach Anspruch 1, dadurch gekennzeichnet, daß der Sender-Empfänger (8) aus einem piezoelektrischen Plättchen besteht, dessen beide Flächen metallisiert sind oder aus einem Magnetorestriktionsstab, der durch eine Anregungsanordnung (80) erregbar ist.

5. Vorrichtung nach Anspruch 1, dadurch gekennzeichnet, daß der Sender-Empfänger (8) aus einem Streifen eines piezoelektrischen Materials besteht, dessen beide Flächen metallisiert sind und durch eine Anregungsanordnung (80) erregt wird.

6. Vorrichtung nach einem der Ansprüche 2 bis 5, dadurch gekennzeichnet, daß die Schallwellen-Sender-Empfänger-Anordnung (8) mit einer elektronischen Anregungsanordnung (80) und einer Anordnung (81) zur Verarbeitung der empfangenen Ultraschallwellen verbunden ist mittels eines sich drehenden Kollektors (12), der mit einer Bürste (13) zusammenwirkt, die über zwei Platten (12a und 12b) streicht, welche symmetrisch zur Achse (Δ) und senkrecht zum Boden (4) angeordnet sind.

7. Vorrichtung nach einem der Ansprüche 2 bis 5, dadurch gekennzeichnet, daß die Sender-Empfänger-Anordnung (8) elektrisch kontaktlos an die elektronischen Anordnungen (80, 81) über zwei feststehende Spulen (23, 24) verbunden ist, die beidseits der Achse (Δ) symmetrisch und senkrecht zum Boden (4) angeordnet sind.

8. Vorrichtung nach einem der Ansprüche 2 bis 5, dadurch gekennzeichnet, daß die Sender-Empfänger-Anordnung (8) an die Anschlüsse einer Spule (30) angeschlossen ist, die auf der Achse (Δ) zentriert ist und wenigstens periodisch mit einer koaxialen Spule (31) gekoppelt ist, die mit den elektronischen Anordnungen zur Anregung (80) und zur Verarbeitung (81) verbunden ist.

9. Vorrichtung nach einem der Ansprüche 7 und 8, dadurch gekennzeichnet, daß eine drehbare Spule (22, 30) eines der Bauteile eines elektroakustischen Resonanzkreises bildet, für den die Sendeanordnung (8) das andere Bauteil bildet.

10. Vorrichtung nach Anspruch 1, dadurch gekennzeichnet, daß die elektronische Anordnung (81) zur Berechnung des Abstandes (D) die Laufzeit $(T_1 - T_0)$ der Schallwelle berechnet, die vom Sender-Empfänger (8) ausgesandt wird und nach Reflexion an der Lauffläche des Reifens an der Berührungsstelle $(E_1)$ des Reifens (3) mit dem Boden (4) empfangen wird und die Laufzeit $(T_2 - T'_0)$ der Schallwelle nach Reflexion an der Stelle $(E_2)$ an der Oberseite des Reifens berechnet und daraus den Wert der Reifenwölbung ermittelt.


**Claims**

1. Apparatus for monitoring the inflation of a pneumatic tyre on a wheel of a vehicle which travels on the ground characterised in that it comprises, disposed at the location of the surface of the rim (2) of the wheel (1), opposite the tread portion of the tyre (3), means for permanent measurement of the flattening of the tyre on the basis of calculation of the deflection of the tyre, said means being formed by an emitting-receiving device (8) for emitting sound waves through the fluid inflating the tyre (3) towards the internal surface (7) of the tread portion and receiving the waves reflected by said surface, and by electronic means (81) for calculating the distance (D) between the rim (2) and the internal face (7) of the tread portion of the tyre, which is measured at the two ends $(E_1$ and $E_2)$ of the diameter of the wheel (1) which is orthogonal to the ground (4).

2. Apparatus according to claim 1 characterised in that the sound wave emitting-receiving device (8) is connected to electronic feed means (80) which excite it at two moments in each revolution of the wheel, corresponding to passing through the vertical to the ground (4) below and above the axis of rotation $(\Delta)$ of the wheel (1).

3. Apparatus according to claim 1 characterised in that the emitting-receiving device (8) is formed by two emitters-receivers (28 and 29) which are disposed symmetrically with respect to the axis of rotation $(\Delta)$ of the wheel (1) at the vertical to the ground (4), on the chassis of the vehicle, said two emitters being associated with an opening (27) in the rim (2).

4. Apparatus according to claim 1 characterised in that the emitting-receiving device (8) is formed by a piezoelectric capsule metallised on its two faces or a magnetostrictive bar which is excited by the feed means (80).

5. Apparatus according to claim 1 characterised in that the emitting-receiving device (8) is formed by a strip of piezoelectric material which is metallised on its two faces and excited by feed means (80).

6. Apparatus according to one of claim 2 to 5 characterised in that the sound emitting-receiving device (8) is connected to the electronic feed means (80) and processing means (81) for processing the sound waves received by way of a rotary collector (12) by means of a brush (13) which rubs against two plates (12a and 12b) disposed symmetrically about the axis $(\Delta)$ on the vertical to the ground (4).

7. Apparatus according to one of claim 2 to 5 characterised in that the emitting-receiving device (8) is electrically connected in a contactless der to the electronic means (80 and 81) by way of two fixed coils (23 and 24) disposed on respective sides of the axis $\Delta$ symmetrically and on the vertical to the ground (4).

8. Apparatus according to one of claim 2 to 5 characterised in that the emitting-receiving device (8) is connected to the terminals of a coil (30) which is centered on the axis $(\Delta)$ and coupled at least periodically to a coaxial coil (31) connected to the electronic feed and processing means (80 and 81 respectively).

9. Apparatus according to one of claim 7 and 8 characterised in that a rotary coil (22, 30) forms one of the elements of an electro-acoustic resonant circuit whose emitter device (8) forms the other element.

10. Apparatus according to claim 1 characterised in that the electronic means (81) for calculating the distance (D) are operable to calculate the travel time $(T_1 - T_0)$ of the sound wave emitted and received by the emitting-receiving device (8) after reflection at the tread portion of the tyre, at the point $(E_1)$ of contact of the tyre (3) with the ground (4), and the travel time $(T_2 - T'_0)$ of the sound wave after reflection at the point $(E_2)$ at the top of the tyre, and to deduce therefrom the value of deflection of the tyre.

0 197 813

FIG.1

FIG.2

FIG.3

FIG.4

FIG.5

FIG.7

FIG.6

FIG.8

FIG.9

FIG.10